(19)

Europäisches
Patentamt
European
Patent Office
Office européen
des brevets

(11)    **EP 4 068 768 A1**

(12)    **EUROPEAN PATENT APPLICATION**
published in accordance with Art. 153(4) EPC

(43) Date of publication:
**05.10.2022 Bulletin 2022/40**

(21) Application number: **20895613.6**

(22) Date of filing: **02.12.2020**

(51) International Patent Classification (IPC):
$H04N\ 13/302^{(2018.01)}$     $H04N\ 13/383^{(2018.01)}$
$H04N\ 13/368^{(2018.01)}$

(52) Cooperative Patent Classification (CPC):
**H04N 13/302; H04N 13/368; H04N 13/383;
H04N 13/398**

(86) International application number:
**PCT/CN2020/133332**

(87) International publication number:
**WO 2021/110038 (10.06.2021 Gazette 2021/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.12.2019 CN 201911231149**

(71) Applicants:
• **Beijing Ivisual 3D Technology Co., Ltd.
Beijing 100055 (CN)**

• **Visiotech Ventures Pte. Ltd.
Singapore 188979 (SG)**

(72) Inventors:
• **DIAO, Honghao
Beijing 100055 (CN)**
• **HUANG, Lingxi
Singapore 188979 (SG)**

(74) Representative: **Manitz Finsterwald
Patent- und Rechtsanwaltspartnerschaft mbB
Martin-Greif-Strasse 1
80336 München (DE)**

(54)    **3D DISPLAY APPARATUS AND 3D IMAGE DISPLAY METHOD**

(57)    The present application relates to the technical field of 3D display, and discloses a 3D display device, comprising: a multi-viewpoint 3D display screen, which comprises a plurality of composite pixels, wherein each composite pixel of the plurality of composite pixels comprises a plurality of composite subpixels, and each composite subpixel of the plurality of composite subpixels comprises a plurality of subpixels corresponding to a plurality of viewpoints of the 3D display device; a viewing angle determining apparatus, configured to determine a user viewing angle of a user; a 3D processing apparatus, configured to render, based on the user viewing angle, corresponding subpixels of the plurality of composite subpixels according to depth-of-field (DOF) information of a 3D model. The device may solve a problem of 3D display distortion. The present application further discloses a 3D image display method, a computer-readable storage medium, and a computer program product.

Fig. 1A

EP 4 068 768 A1

**Description**

The present application claims priority to the Chinese Patent Application with an application number of 201911231149X and a title of "3D Display Device and 3D Image Display Method", filed to China National Intellectual Property Administration on December 5th, 2019, the disclosures of which are hereby incorporated by reference.

TECHNICAL FIELD

The present application relates to the technical field of 3D display, and for example, relates to a 3D display device and a 3D image display method.

BACKGROUND

3D display technology has become a research hotspot in image technology because it can present lifelike visual experience to users.

In a process of implementing embodiments of the present disclosure, it is found that the related technologies have at least the following problems: users at all positions see a same 3D image, and only users within a certain range will have real feelings, while other users beyond the range will feel display distortion.

The present background is only for the convenience of understanding the related technologies in the field, and is not regarded as an admission of the existing technologies.

SUMMARY

In order to provide a basic understanding of some aspects of the disclosed embodiments, a brief summary is given below. The summary is not intended to be a general comment, nor to identify key/important components or describe the scope of protection of the embodiments, but to be a preface to the following detailed description.

Embodiments of the present disclosure provide a 3D display device, a 3D image display method, a computer-readable storage medium, and a computer program product, to solve a technical problem of 3D display distortion.

In some embodiments, a 3D display device is provided, comprising: a multi-viewpoint 3D display screen, which comprises a plurality of composite pixels, wherein each composite pixel of the plurality of composite pixels comprises a plurality of composite subpixels, and each composite subpixel of the plurality of composite subpixels comprises a plurality of subpixels corresponding to a plurality of viewpoints of the 3D display device; a viewing angle determining apparatus, configured to determine a user viewing angle of a user; a 3D processing apparatus, configured to render, based on the user viewing angle, corresponding subpixels of the plurality of composite subpixels according to depth-of-field (DOF) information of a 3D model.

In some embodiments, the 3D processing apparatus is configured to generate a 3D image from the DOF information, and render corresponding subpixels according to the 3D image, based on the user viewing angle.

In some embodiments, the 3D display device further comprises: an eye positioning apparatus, configured to determine eye space positions of the user; the 3D processing apparatus is configured to determine viewpoints where eyes of the user are located based on the eye space positions, and render subpixels corresponding to the viewpoints where eyes of the user are located based on the 3D image.

In some embodiments, the eye positioning apparatus comprises: an eye positioner, configured to shoot a user image of the user; an eye positioning image processor, configured to determine eye space positions based on the user image; and an eye positioning data interface, configured to transmit eye space position information indicating the eye space positions.

In some embodiments, the eye positioner comprises: a first camera, configured to shoot first images, and a second camera, configured to shoot second images; the eye positioning image processor is configured to identify presence of eyes based on at least one of the first images and the second images and determine the eye space positions based on the identified eyes.

In some embodiments, the eye positioner comprises: a camera, configured to shoot images, and a depth detector, configured to acquire eye depth information of the user; the eye positioning image processor is configured to identify presence of eyes based on the images and determine the eye space positions based on the identified eye positions and the eye depth information.

In some embodiments, the user viewing angle is an angle between the user and a display plane of the multi-viewpoint 3D display screen.

In some embodiments, the user viewing angle is an angle between a user sightline and the display plane of the multi-viewpoint 3D display screen, wherein the user sightline is a connecting line between a midpoint of a connecting line, between both eyes of the user, and a center of the multi-viewpoint 3D display screen.

In some embodiments, the user viewing angle is: an angle between the user sightline and at least one of transverse, vertical and depth directions of the display plane; or an angle between the user sightline and a projection of the user sightline in the display plane.

In some embodiments, the 3D display device further comprises: a 3D signal interface, configured to receive the 3D model.

In some embodiments, a 3D image display method is provided, comprising: determining a user viewing angle of a user; and rendering corresponding subpixels in composite subpixels of composite pixels in a multi-viewpoint 3D display screen according to DOF information of a 3D model based on the user viewing angle.

In some embodiments, rendering corresponding subpixels in composite subpixels of composite pixels in a multi-viewpoint 3D display screen according to DOF information of a 3D model based on the user viewing angle comprises: generating a 3D image from the DOF information based on the user viewing angle, and rendering the corresponding subpixels according to the 3D image.

In some embodiments, the 3D image display method further comprises: determining eye space positions of the user; determining viewpoints where eyes of the user are located based on the eye space positions; and rendering subpixels corresponding to the viewpoints where eyes of the user are located based on the 3D image.

In some embodiments, determining eye space positions of the user comprises: shooting a user image of the user; determining eye space positions based on the user image; and transmitting eye space position information which indicates the eye space positions.

In some embodiments, shooting a user image of the user and determining eye space positions based on the user image comprises: shooting first images; shooting second images; identifying presence of eyes based on at least one of the first images and the second images; and determining the eye space positions based on the identified eyes.

In some embodiments, shooting a user image of the user and determining eye space positions based on the user image comprises: shooting images; acquiring eye depth information of the user; identifying presence of eyes based on the images; and jointly determining the eye space positions based on the identified eye positions and the eye depth information.

In some embodiments, the user viewing angle is an angle between the user and a display plane of the multi-viewpoint 3D display screen.

In some embodiments, the user viewing angle is an angle between a user sightline and the display plane of the multi-viewpoint 3D display screen, wherein the user sightline is a connecting line between a midpoint of a connecting line, between both eyes of the user, and a center of the multi-viewpoint 3D display screen.

In some embodiments, the user viewing angle is: an angle between the user sightline and at least one of transverse, vertical and depth directions of the display plane; or an angle between the user sightline and a projection of the user sightline in the display plane.

In some embodiments, the 3D image display method further comprises: receiving a 3D model.

In some embodiments, a 3D display device is provided, comprising: a processor, and a memory storing program instructions; the processor is configured to execute the above method when executing the program instructions.

The computer-readable storage medium provided by the embodiments of the present disclosure stores computer-executable instructions; and the computer-executable instructions are configured to execute the 3D image display method.

The computer program product provided by the embodiments of the present disclosure comprises computer programs stored on the computer-readable storage medium; the computer programs comprise program instructions; and when the program instructions are executed by a computer, the computer executes the 3D image display method.

The 3D display device, the 3D image display method, the computer-readable storage medium, and the computer program product provided by the embodiments of the present disclosure may achieve the following technical effects:

Follow-up 3D display effects are provided for users based on viewing angles; users at different angles can see different 3D display pictures, and the display effects are lifelike; and the display effects of different angles can also be adjusted with changes of the viewing angles of the users, so as to present an excellent visual effect to the users.

The above general description and the following description are exemplary and explanatory only, and are not intended to limit the present application.

DESCRIPTION OF DRAWINGS

One or more embodiments are illustrated by the corresponding drawings, and the illustrations and drawings do not limit the embodiments. Elements having the same reference numerals in the drawings are shown as similar elements, and the drawings are not intended to limit the scale, wherein:

Figs. 1A to 1C are schematic diagrams of a 3D display device according to embodiments of the present disclosure;

Fig. 2 is a schematic diagram of an eye positioning apparatus according to an embodiment of the present disclosure;

Fig. 3 is a geometric relationship model for determining eye space positions with two cameras according to an embodiment of the present disclosure;

Fig. 4 is a schematic diagram of an eye positioning apparatus according to another embodiment of the present disclosure;

Fig. 5 is a geometric relationship model for determining eye space positions with a camera and a depth detector according to an embodiment of the present disclosure;

Fig. 6 is a schematic diagram of a user viewing angle according to an embodiment of the present disclosure;

Fig. 7 is a schematic diagram of a user viewing angle according to another embodiment of the present disclosure;

Fig. 8 is a schematic diagram of generating 3D images corresponding to different user viewing angles according to an embodiment of the present disclosure;

Figs. 9A to 9E are schematic diagrams of a correspondence between viewpoints and subpixels according to embodiments of the present disclosure;

Fig. 10 is a flow chart of a display method of a 3D display device according to an embodiment of the present disclosure; and

Fig. 11 is a schematic diagram of a 3D display device according to an embodiment of the present disclosure.

Reference numerals:
100: 3D display device; 110: multi-viewpoint 3D display screen; 120: processor; 121: register; 130: 3D processing apparatus; 131: buffer; 140: 3D signal interface; 150: eye positioning apparatus; 151: eye positioner; 151a: first camera; 151b: second camera; 152: eye positioning image processor; 153: eye positioning data interface; 154: infrared emitting apparatus; 155: camera; 156: buffer; 157: comparator; 158: depth detector; 160: viewing angle determining apparatus; 300: 3D display device; 310: memory; 320: processor; 330: bus; 340: communication interface; 400: composite pixel; 410: red composite subpixel; 420: green composite subpixel; 430: blue composite subpixel; 500: composite pixel; 510: red composite subpixel; 520: green composite subpixel; 530: blue composite subpixel; F: focal length; Za: optical axis of the first camera; Zb: optical axis of the second camera; 401a: focal plane of the first camera; 401b: focal plane of the second camera; Oa: lens center of the first camera; Ob: lens center of the second camera; XRa: X-axis coordinate of imaging of a right eye of the user in the focal plane of the first camera; XRb: X-axis coordinate of imaging of the right eye of the user in the focal plane of the second camera; XLa: X-axis coordinate of imaging of a left eye of the user in the focal plane of the first camera; XLb: X-axis coordinate of imaging of the left eye of the user in the focal plane of the second camera; T: distance between the first camera and the second camera; DR: distance between the right eye and a plane in which the first camera and the second camera are located; DL: distance between the left eye and the plane in which the first camera and the second camera are located; $\alpha$: tilt angle between a connecting line, between both eyes of the user, and the plane in which the first camera and the second camera are located; P: distance or pupil distance of both eyes of the user; Z: optical axis; FP: focal plane; XR: X-axis coordinate of imaging of the right eye of the user in a focal plane of a camera; XL: X-axis coordinate of imaging of the left eye of the user in the focal plane of the camera; O: lens center; MCP: camera plane; $\beta$R: tilt angle of a projection of a connecting line between the left eye and the lens center in an XZ plane relative to an X axis; $\beta$L: tilt angle of a projection of a connecting line between the right eye and the lens center in the XZ plane relative to the X axis; $\alpha$: angle between a projection of the connecting line, between both eyes of the user in the XZ plane and the X axis; and P: pupil distance of both eyes of the user.

DETAILED DESCRIPTION

For more detailed understanding of characteristics and technical contents of embodiments of the present disclosure, the implementation of the embodiments of the present disclosure will be described in detail below with reference to the accompanying drawings, and the accompanying drawings are used for reference only, instead of limiting the embodiments of the present disclosure.

According to embodiments of the present disclosure, a 3D display device is provided, comprising a multi-viewpoint 3D display screen (for example, a multi-viewpoint naked-eye 3D display screen), a viewing angle determining apparatus configured to determine a user viewing angle of a user, and a 3D processing apparatus configured to render corresponding subpixels in composite subpixels of composite pixels contained in the multi-viewpoint 3D display screen based on the user viewing angle and according to DOF information of a 3D model or 3D video.

In some embodiments, the 3D processing apparatus generates a 3D image based on the user viewing angle and according to the DOF information of the 3D model or 3D video, for example, generating a 3D image corresponding to the user viewing angle. A correspondence between the user viewing angle and the generated 3D image is similar to that, when the user sees a real scene from different angles, the user will see scene representations corresponding to the angles. For different user viewing angles, 3D images generated by DOF information of 3D models or 3D videos may be different. Therefore, the 3D images following up the user viewing angles are generated; and 3D images seen by users at different viewing angles are different, so that the users can feel like viewing real objects with the help of the multi-viewpoint 3D display screen, and display effect and user experience can be improved.

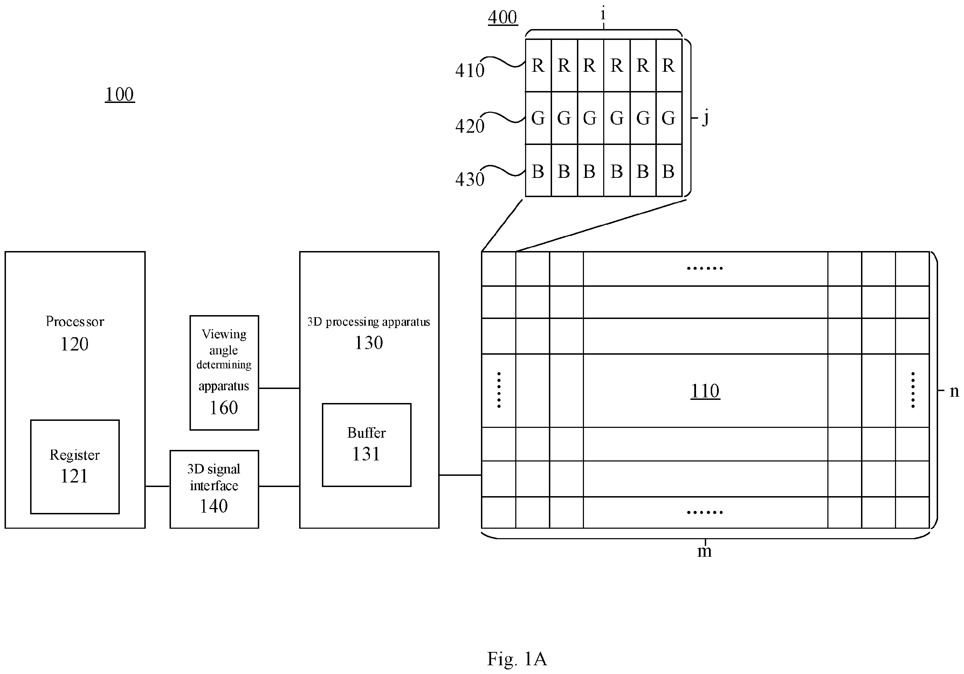

Fig. 1A shows a schematic diagram of a 3D display device 100 according to an embodiment of the present disclosure. As shown in Fig. 1A, the 3D display device 100 comprises a multi-viewpoint 3D display screen 110, a 3D processing apparatus 130, an eye positioning apparatus 150, a viewing angle determining apparatus 160, a 3D signal interface 140 and a processor 120.

In some embodiments, the multi-viewpoint 3D display screen 110 may comprise a display panel and a grating (not shown) covering the display panel. The display panel may comprise m columns and n rows (m×n) of composite pixels 400 and thus define a display resolution of m×n. The display resolution of m×n, for example, may be a resolution above full high definition (FHD), including but not limited to: 1920×1080, 1920×1200, 2048×1280, 2560×1440, 3840×2160 and the like. Each composite pixel comprises a plurality of composite subpixels; and each composite subpixel comprise homochromatic subpixels corresponding to i viewpoints, wherein i>3.

Fig. 1A schematically shows a composite pixel 400 of the m×n composite pixels, comprising red composite subpixels 410 composed of i=6 red subpixels R, green composite subpixels 420 composed of i=6 green subpixels G, and blue composite subpixels 430 composed of i=6 blue subpixels B. The 3D display device 100 correspondingly has i=6 viewpoints (V1-V6). In other embodiments, conceivably, i may be other values greater or less than 6, such as 10, 30, 50, and 100.

In some embodiments, each composite pixel is square. A plurality of composite subpixels in each composite pixel may be arranged in parallel with each other. i subpixels in each composite subpixel may be arranged in rows.

In some embodiments, the 3D processing apparatus is an FPGA or ASIC chip or an FPGA or ASIC chipset. In some embodiments, the 3D display device 100 may also be provided with more than one 3D processing apparatus 130, which processes the rendering of subpixels of each composite subpixel of each composite pixel of the 3D display screen 110 in parallel, series or a combination of series and parallel. Those skilled in the art will understand that more than one 3D processing apparatus may be allocated in other ways and process multiple rows and columns of composite pixels or composite subpixels of the 3D display screen 110 in parallel, which falls within the scope of embodiments of the present disclosure. In an embodiment as shown Fig. 1A, the 3D processing apparatus 130 may optionally comprise a buffer 131, to buffer the received images of 3D videos.

In some embodiments, the processor is contained in a computer, or an intelligent terminal such as a mobile terminal. Optionally, the processor may serve as a processor unit of the computer or intelligent terminal. However, conceivably, in some embodiments, the processor 120 may be arranged outside the 3D display device 100; for example, the 3D display device 100 may be a multi-viewpoint 3D display device with a 3D processing apparatus, such as a non-smart 3D TV.

In some embodiments, the 3D display device internally comprises a processor. Based on this, the 3D signal interface 140 is an internal interface connecting the processor 120 with the 3D processing apparatus 130. Such a 3D display device 100, for example, may be a mobile terminal; and the 3D signal interface 140 may be a mobile industry processor interface (MIPI), a mini-MIPI, a low voltage differential signaling (LVDS) interface, a min-LVDS interface or a Display Port interface.

As shown in Fig. 1A, the processor 120 of the 3D display device 100 may further comprise a register 121. The register 121 may be configured to temporarily store instructions, data and addresses. In some embodiments, the register 121 may be configured to receive information about display requirements of the multi-viewpoint 3D display screen 110. In some embodiments, the 3D display device 100 may further comprise a codec, configured to decompress and encode compressed 3D video signals and transmit the decompressed 3D video signals to the 3D processing apparatus 130 through the 3D signal interface 140.

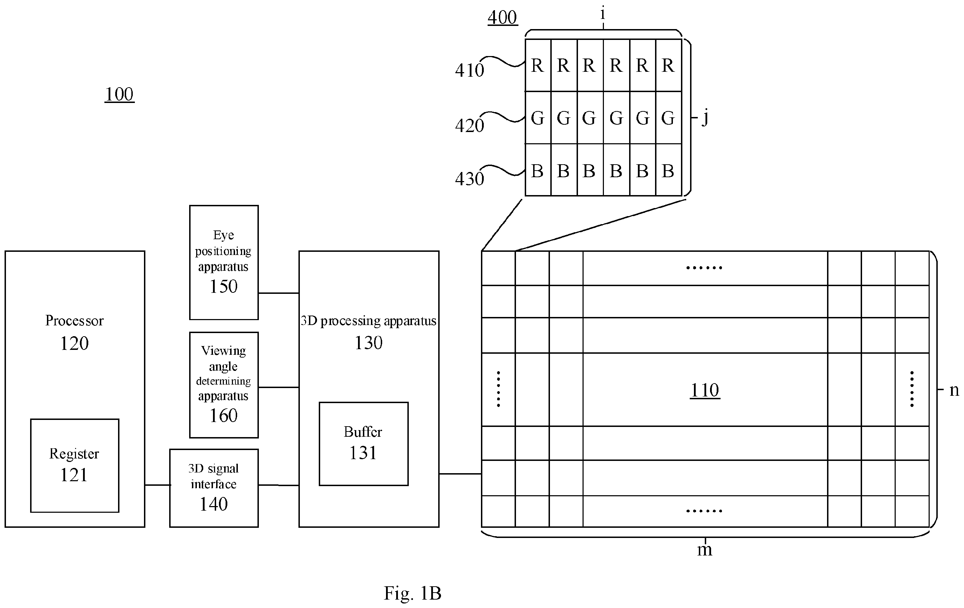

In some embodiments, the 3D display device 100 may comprise an eye positioning apparatus configured to acquire/determine eye positioning data. For example, in an embodiment shown in Fig. 1B, the 3D display device 100 comprises an eye positioning apparatus 150 communicatively connected to the 3D processing apparatus 130, so that the 3D processing apparatus 130 may directly receive eye positioning data. In some embodiments, the eye positioning apparatus 150 may be simultaneously connected with the processor 120 and the 3D processing apparatus 130, so that on the one hand, the 3D processing apparatus 130 may directly acquire eye positioning data from the eye positioning apparatus 150, and on the other hand, other information acquired by the eye positioning apparatus 150 from the processor 120 may be processed by the 3D processing apparatus 130.

In some embodiments, the eye positioning data comprise the eye space position information indicating the user eye space positions; and the eye space position information may be expressed in the form of 3D coordinates, for example, comprising distance information between the eyes/face of the user and the multi-viewpoint 3D display screen or eye positioning apparatus (i.e., the depth information of the eyes/face of the user), position information of the viewed eyes/face in a horizontal direction of the multi-viewpoint 3D display screen or eye positioning apparatus, and position information of the eyes/face of the user in a vertical direction of the multi-viewpoint 3D display screen or eye positioning apparatus. The eye space positions may also be expressed in the form of 2D coordinates including any two information of distance information, horizontal position information and vertical position information. The eye positioning data may also comprise the viewpoints (viewpoint position) where the eyes of the user (e.g., both eyes) are located, the user viewing angle and the like.

In some embodiments, the eye positioning apparatus comprises an eye positioner configured to shoot a user image (e.g., a face image of the user), an eye positioning image processor configured to determine the eye space positions based on the shot user image, and an eye positioning data interface configured to transmit the eye space position information, which indicates the eye space positions.

In some embodiments, the eye positioner comprises a first camera configured to shoot first images, and a second camera configured to shoot second images; the eye positioning image processor is configured to identify presence of eyes based on at least one of the first images and the second images and determine the eye space positions based on the identified eyes.

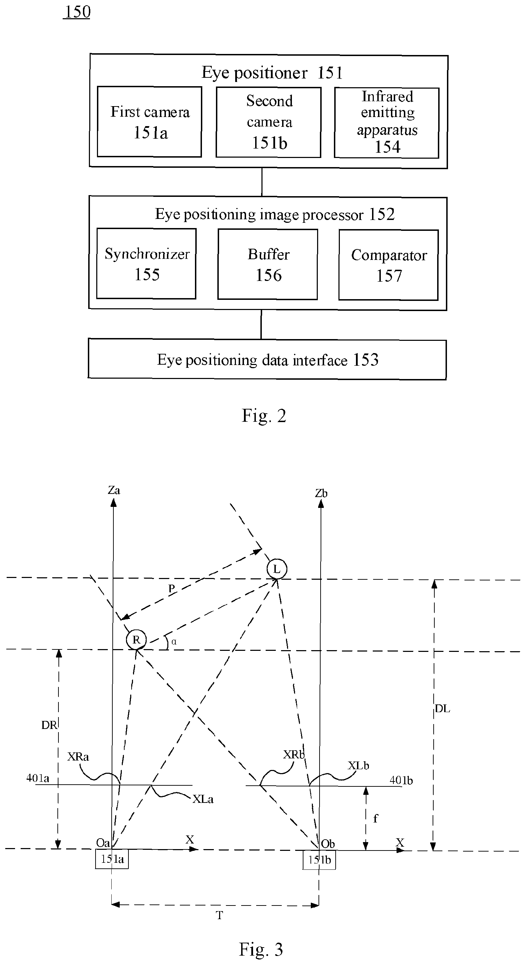

Fig. 2 shows an example in which the eye positioner in the eye positioner is provided with two cameras. As shown in the figure, the eye positioning apparatus 150 comprises an eye positioner 151, an eye positioning image processor 152 and an eye positioning data interface 153. The eye positioner 151 comprises a first camera 151a such as a black-and-white camera, and a second camera 151b such as a black-and-white camera. The first camera 151a is configured to shoot first images such as black-and-white images; and the second camera 151b is configured to shoot second images such as black-and-white images. The eye positioning apparatus 150 may be arranged in the front of the 3D display device 100, for example, being arranged in the multi-viewpoint 3D display screen 110. Shot objects of the first camera 151a and the second camera 151b may be the face of the user. In some embodiments, at least one of the first camera and the second camera may be a color camera, being configured to shoot color images.

In some embodiments, the eye positioning data interface 153 of the eye positioning apparatus 150 is communicatively connected to the 3D processing apparatus 130 of the 3D display device 100, so that the 3D processing apparatus 130 may directly receive eye positioning data. In other embodiments, the eye positioning image processor 152 of the eye positioning apparatus 150 may be communicatively connected to or integrated to the processor 120, so that the eye positioning data may be transmitted from the processor 120 to the 3D processing apparatus 130 through the eye positioning data interface 153.

Optionally, the eye positioner 151 is further provided with an infrared emitting apparatus 154. When the first camera or the second camera works, the infrared emitting apparatus 154 is configured to selectively emit infrared light, to play a role of supplementing light when the ambient light is insufficient, for example, when shooting at night, so that the first images and the second images available for identifying the face and eyes of the user may also be shot even under the condition of weak ambient light.

In some embodiments, the display device may be configured to, when the first camera or the second camera works, based on a received light sensing signal, for example, control the turn-on or adjust the size of the infrared emitting apparatus when the light sensing signal is detected to be lower than a given threshold. In some embodiments, the light sensing signal is received by an ambient light sensor, integrated in the processing terminal or the display device. The operation for the infrared emitting apparatus may also be completed by an eye positioning apparatus or a processing terminal integrated with the eye positioning apparatus.

Optionally, the infrared emitting apparatus 154 is configured to emit infrared light with a wavelength greater than or equal to 1.5 microns, i.e., long-wave infrared light. Compared with short-wave infrared light, the ability of the long-wave infrared light to penetrate the skin is weak, so the long-wave infrared light is less harmful to the eyes.

The shot first images and second images are transmitted to the eye positioning image processor 152. The eye positioning image processor 152 may be configured to have a visual identification function (e.g., a face identification function), and may be configured to identify the eyes based on at least one of the first images and the second images and to determine eye space positions based on the identified eyes. The identification for eyes may be completed by firstly identifying the face based on at least one of the first images and the second images, and then identifying the eyes based on the identified face.

In some embodiments, the eye positioning image processor 152 may determine the viewpoints, where the eyes of the user are located based on the eye space positions. In other embodiments, the 3D processing apparatus 130 determines the viewpoints, where the eyes of the user are located based on the acquired eye space positions.

In some embodiments, the first camera and the second camera may be the same camera, such as the same black-and-white camera or the same color camera. In other embodiments, the first camera and the second camera may be different cameras, such as different black-and-white cameras or different color cameras. When the first camera and the second camera are different cameras, in order to determine the eye space positions, the first images and the second images may be calibrated or corrected.

In some embodiments, at least one of the first camera and the second camera is a wide-angle camera.

Fig. 3 schematically shows a geometric relationship model for determining eye space positions with two cameras. In an embodiment shown in Fig. 3, the first camera and the second camera are the same camera, thereby having the same focal length f. An optical axis Za of the first camera 151a is parallel to an optical axis Zb of the second camera 151b, while a focal plane 401a of the first camera 151a and a focal plane 401b of the second camera 151b are in the same plane and perpendicular to the optical axes of the two cameras. Based on the above arrangements, a connecting line between lens centers Oa and Ob of the two cameras is parallel to the focal planes of the two cameras. In the embodiment shown in Fig. 3, a geometric relationship model of an XZ plane is shown by taking a direction of the connecting line of the lens centers Oa to Ob of the two cameras as an X-axis direction and taking a direction of the optical axes of the two cameras as a Z-axis direction. In some embodiments, the X-axis direction is also the horizontal direction; the Y-axis direction is also the vertical direction; and the Z-axis direction is a direction perpendicular to the XY plane (also called depth direction).

In the embodiment shown in Fig. 3, the lens center Oa of the first camera 151a is taken as an origin, and the lens center Ob of the second camera 151b is taken as an origin. R and L respectively represent a right eye and a left eye of the user; XRa and XRb respectively represent X-axis coordinates of imaging of the right eye R of the user in the focal planes 401a and 401b of the two cameras; and XLa and XLb respectively represent X-axis coordinates of imaging of the left eye L of the user in the focal planes 401a and 401b of the two cameras. In addition, a distance T between the two cameras and the focal lengths f of the two cameras are also known. According to a geometric relationship of similar triangles, distances DR and DL between the right eye R and the left eye L and the planes, in which the two cameras set as above are, may be respectively solved as follows:

$$DR = \frac{T \cdot f}{XRb - XRa}$$

$$DL = \frac{T \cdot f}{XLb - XLa}$$

In addition, a tilt angle $\alpha$ formed by a connecting line between both eyes of the user and the planes, in which the two cameras set as above are, and a distance or a pupil distance P between both eyes of the user may be respectively solved as follows:

$$\alpha = \arctan\left(\frac{DL - DR}{\dfrac{XLb \cdot DL - XRa \cdot DR}{f} + T}\right)$$

$$P = \frac{DL - DR}{\sin \alpha}$$

In the embodiment shown in Fig. 3, the connecting line between both eyes of the user (or the face of the user) and the planes, in which the two cameras set as above are, are tilted to each other; and the tilt angle is $\alpha$. When the face of the user is parallel to the planes, in which the two cameras set as above are, (i.e., when the user looks at the two cameras head-on,) the tilt angle $\alpha$ is zero.

In some embodiments, the 3D display device 100 may be a computer or an intelligent terminal, such as a mobile terminal. However, conceivably, in some embodiments, the 3D image display device 100 may also be a non-smart display terminal, such as a non-smart 3D TV. In some embodiments, the eye positioning apparatus 150 comprising two cameras 151a and 151b is placed in the front of the multi-viewpoint 3D display screen, or is basically located in the same plane as a display plane of the multi-viewpoint 3D display screen. Therefore, in the embodiment shown in Fig. 3, the distances DR and DL between the right eye R and left eye L of the user and the planes, in which the two cameras set as above are, are distances between the right eye R and left eye L of the user and the multi-viewpoint 3D display screen (or depths of the right eye and left eye of the user); and the tilt angle $\alpha$ formed between the face of the user and the planes, in which the two cameras set as above are, is a tilt angle of the face of the user relative to the multi-viewpoint 3D display screen.

In some embodiments, the eye positioning data interface 153 is configured to transmit the tilt angle or parallelism of both eyes of the user relative to the eye positioning apparatus 150 or the multi-viewpoint 3D display screen 110. This may make for more accurately presenting the 3D images.

In some embodiments, the eye space position information DR, DL, $\alpha$ and P obtained as an example above is transmitted to the 3D processing apparatus 130 through the eye positioning data interface 153. The 3D processing apparatus 130 determines the viewpoints, where the eyes of the user are located based on the received eye space position information. In some embodiments, the 3D processing apparatus 130 may pre-store a correspondence table between the eye space positions and the viewpoints of the 3D display device. After the eye space position information is acquired, the viewpoints, where the eyes of the user are located, may be determined based on the correspondence table. Optionally, the correspondence table may also be received/read by the 3D processing apparatus from other components with storage functions (e.g., processors).

In some embodiments, the eye space position information DR, DL, $\alpha$ and P obtained as an example above may also be directly transmitted to the processor of the 3D display device 100; and the 3D processing apparatus 130 receives/reads the eye space position information from the processor through the eye positioning data interface 153.

In some embodiments, the first camera 151a is configured to shoot a first image sequence, which comprises a plurality of first images arranged in time sequence; and the second camera 151b is configured to shoot a second image sequence, which comprises a plurality of second images arranged in time sequence. The eye positioning image processor 152 may comprise a synchronizer 155. The synchronizer 155 is configured to determine time-synchronized first images and second images in the first image sequence and the second image sequence. The first images and second images, determined to be time-synchronized, are used for identification of the eyes and determination of the eye space positions.

In some embodiments, the eye positioning image processor 152 comprises a buffer 156 and a comparator 157. The buffer 156 is configured to buffer the first image sequence and the second image sequence. The comparator 157 is configured to compare a plurality of first images and second images in the first image sequence and the second image sequence. By comparison, whether the eye space positions are changed may be judged, and whether the eyes are still in a viewing range may also be judged. Judging whether the eyes are still in the viewing range may also be performed by the 3D processing apparatus.

In some embodiments, the eye positioning image processor 152 is configured to, when the presence of eyes is not identified in a current first image and second image in the first image sequence and the second image sequence and the presence of eyes is identified in a previous or subsequent first image and second image, take eye space position information determined based on the previous or subsequent first and second image as current eye space position information. This case may happen, for example, when the user turns his head briefly. In this case, the face and eyes of the user may not be identified for a short time.

In some embodiments, the eye space position information determined based on the above previous and subsequent first images and second images available for identifying the face and the eyes may be averaged, data-fitted, interpolated or processed by other methods; and the obtained results may be taken as the current eye space position information.

In some embodiments, the first camera and the second camera are configured to shoot the first image sequence and the second sequence at a frequency of 24fps or more, for example, shooting at a frequency of 30fps or shooting at a frequency of 60fps.

In some embodiments, the first camera and the second camera are configured to shoot at the same frequency as a refresh frequency of the multi-viewpoint 3D display screen of the 3D display device.

In some embodiments, the eye positioner comprises: at least one camera configured to shoot at least one image and a depth detector configured to acquire eye depth information of the user; the eye positioning image processor is configured to identify presence of eyes based on the shoot at least one image and determine the eye space positions based on the identified eyes and the eye depth information.

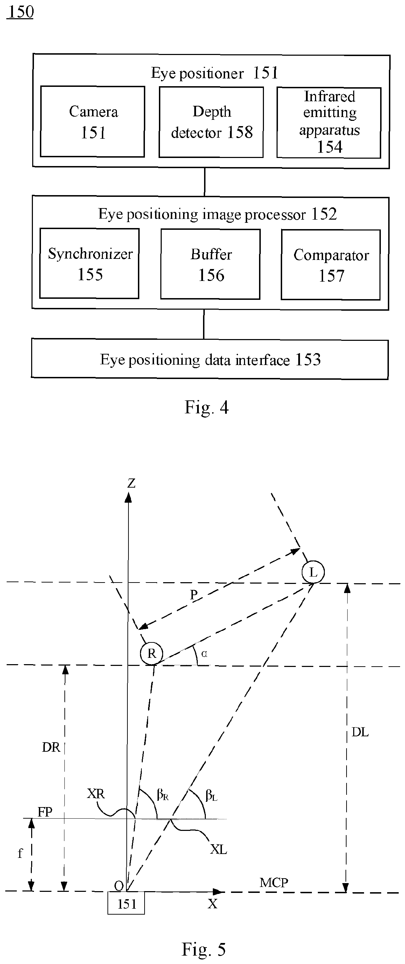

Fig. 4 shows an example in which the eye positioner in the eye positioner is provided with a single camera and a depth detector. As shown in the figure, the eye positioning apparatus 150 comprises an eye positioner 151, an eye positioning image processor 152 and an eye positioning data interface 153. The eye positioner 151 comprises a camera 155 such as a black-and-white camera, and a depth detector 158. The camera 155 is configured to shoot at least one image, such as a black-and-white image; and the depth detector 158 is configured to acquire the eye depth information of the user. The eye positioning apparatus 150 may be arranged in the front of the 3D display device 100, for example, being arranged in the multi-viewpoint 3D display screen 110. The shot object of the camera 155 is a face of the user; and the face or eyes are identified based on the shot image. The depth detector acquires eye depth information, may also acquire face depth information, and acquire the eye depth information based on the face depth information. In some embodiments, the camera 155 may be a color camera, and is configured to shoot color images. In some embodiments, two or more cameras 155 may also be adopted to cooperate with the depth detector 158 to determine the eye space positions.

In some embodiments, the eye positioning data interface 153 of the eye positioning apparatus 150 is communicatively connected to the 3D processing apparatus 130 of the 3D display device 100, so that the 3D processing apparatus 130 may directly receive eye positioning data. In other embodiments, the eye positioning image processor 152 may be communicatively connected to or integrated to the processor 120 of the 3D display device 100, so that the eye positioning data may be transmitted from the processor 120 to the 3D processing apparatus 130 through the eye positioning data interface 153.

Optionally, the eye positioner 151 is further provided with an infrared emitting apparatus 154. When the camera 155 works, the infrared emitting apparatus 154 is configured to selectively emit infrared light, to play a role of supplementing light when the ambient light is insufficient, for example, when shooting at night, so that the images available for identifying the face and eyes of the user may also be shot even under the condition of weak ambient light.

In some embodiments, the display device may be configured to, when the camera works, based on a received light sensing signal, for example, control the turn-on or adjust the size of the infrared emitting apparatus when the light sensing signal is detected to be lower than a given threshold. In some embodiments, the light sensing signal is received by an ambient light sensor, integrated in the processing terminal or the display device. The operation for the infrared emitting apparatus may also be completed by an eye positioning apparatus or a processing terminal integrated with the eye positioning apparatus.

Optionally, the infrared emitting apparatus 154 is configured to emit infrared light with a wavelength greater than or equal to 1.5 microns, i.e., long-wave infrared light. Compared with short-wave infrared light, the ability of the long-wave infrared light to penetrate the skin is weak, so the long-wave infrared light is less harmful to the eyes.

The shot images are transmitted to the eye positioning image processor 152. The eye positioning image processor may be configured to have a visual identification function (e.g., a face identification function), and may be configured to identify the face based on the shot image and determine eye space positions based on the identified eye positions and the eye depth information of the user, and to determine the viewpoints, where the eyes of the user are located based on the eye space positions. In other embodiments, the 3D processing apparatus determines the viewpoints, where the eyes of the user are located based on the acquired eye space positions. In some embodiments, the camera is a wide-angle camera. In some embodiments, the depth detector 158 is configured as a structured light camera or a time-of-flight (TOF) camera.

Fig. 5 schematically shows a geometric relationship model for determining eye space positions with a camera and a depth detector. In an embodiment shown in Fig. 5, the camera has a focal length f, an optical axis Z and a focal plane FP; R and L represent the right eye and left eye of the user, respectively; and XR and XL represent X-axis coordinates of imaging of the right eye R and left eye L of the user in the focal plane FP of the camera 155.

By way of explanation but not limitation, X-axis (horizontal direction) coordinates and Y-axis (vertical direction) coordinates of imaging of the left eye and the right eye in the focal plane FP of the camera 155 may be known from images, shot with the camera 155, containing images of the left eye and right eye of the user. As shown in Fig. 5, taking a lens center O of the camera 155 as an origin, an X axis and a Y axis (not shown) perpendicular to the X axis form a camera plane MCP, which is parallel to the focal plane FP. An optical axis direction Z of the camera 155 is also the depth direction. In other words, in the XZ plane shown in Fig. 5, the X-axis coordinates XR and XL of imaging of the left eye and the right eye in the focal plane FP are known. In addition, the focal length f of the camera 155 is known. In this case, the tilt angles βR and βL of projections of the connecting lines between each of the left eye and the right eye and the lens center O of the camera in the XZ plane relative to the X axis can be calculated. Similarly, in a YZ plane (not shown), Y-axis coordinates of imaging of the left eye and the right eye in the focal plane FP are known; and in combination with the known focal length f, the tilt angle of the projections of the connecting lines between the left eye and the right eye and the lens center O of the camera in the YZ plane relative to the Y axis of the camera plane MCP can be calculated.

By way of explanation but not limitation, space coordinates (X, Y, Z) of the left eye and the right eye in a coordinate system of the camera 155 can be known from the images, shot with the camera 155, containing the left eye and the right eye of the user and the depth information of the left eye and the right eye acquired by the depth detector 158, wherein the Z-axis coordinate is the depth information. Accordingly, as shown in Fig. 5, the angle α formed by the projection of the connecting line between the left eye and the right eye in the XZ plane and the X axis can be calculated. Similarly, in the YZ plane (not shown), an angle formed by the projection of the connecting line between the left eye and the right eye in the YZ plane and the Y axis can be calculated.

As shown in Fig. 5, when the focal length f of the camera 155 and the X-axis coordinates XR and XL of both eyes in the focal plane FP are known, the tilt angles βR and βL of the projection of the connecting line between the right eye R and the left eye L of the user and the lens center O in the XZ plane relative to the X axis can be respectively calculated as follows:

$$\beta_R = arccot\left(\frac{XR}{f}\right)$$

$$\beta_L = arccot\left(\frac{XL}{f}\right)$$

On this basis, the distances DR and DL of the right eye R and the left eye L of the user relative to the camera plane MCP/the display plane of the multi-viewpoint 3D display screen can be known from the depth information of the right eye R and the left eye L acquired by the depth detector 158. Accordingly, the angle α formed by the projection of the connecting line between both eyes of the user in the XZ plane and the X axis, and the pupil distance P may be respectively calculated as follows:

$$\alpha = arctan\left(\frac{f \cdot (DL - DR)}{DL \cdot XL - DR \cdot XR}\right)$$

$$P = \frac{DL - DR}{\sin \alpha}$$

The above calculation methods and mathematical expressions are only schematic; and persons skilled in the field may come up with other calculation methods and mathematical expressions, to obtain the required eye space positions. The persons skilled in the field may also think of transforming the coordinate system of the camera with the coordinate system of the display device or the multi-viewpoint 3D display screen if necessary.

In some embodiments, when the distances DR and DL are unequal and the angle α is not zero, it can be considered that the user faces the display plane of the multi-viewpoint 3D display screen at a certain tilt angle. When the distances DR and DL are equal and the viewing angle α is zero, it can be considered that the user looks at the display plane of the multi-viewpoint 3D display screen head-on. In other embodiments, a threshold may be set for the angle α and if the angle α does not exceed the threshold, it can be considered that the user looks at the display plane of the multi-viewpoint 3D display screen head-on.

In some embodiments, a user viewing angle can be obtained based on the identified eyes or the determined eye space positions; and a 3D image corresponding to the user viewing angle is generated from a 3D model or a 3D video including DOF information based on the user viewing angle, so that the 3D effect displayed according to the 3D image is follow-up for the user, thus the user can get the feeling of viewing a real object or scene at a corresponding angle.

In some embodiments, the user viewing angle is an angle of the user relative to the camera.

In some embodiments, the user viewing angle may be an angle of the connecting line between the eye (a single eye) of the user and the lens center O of the camera relative to the coordinate system of the camera. In some embodiments, the angle, for example, is an angle θX between the connecting line and the X axis (transverse direction) in the coordinate system of the camera, or an angle θY between the connecting line and the Y axis (vertical direction) in the coordinate system of the camera, or is expressed as θ(X, Y). In some embodiments, the angle, for example, is an angle between a projection of the connecting line in the XY plane of the coordinate system of the camera and the connecting line. In some embodiments, the angle, for example, is an angle θX between the projection of the connecting line in the XY plane of the coordinate system of the camera and the X axis, or an angle θY between the projection of the connecting line in the XY plane of the coordinate system of the camera and the Y axis, or is expressed as θ(X, Y).

In some embodiments, the user viewing angle may be an angle of a midpoint of the connecting line between both eyes of the user and the lens center O of the camera (i.e., a user sightline) relative to the coordinate system of the camera. In some embodiments, the angle, for example, is an angle θX between the user sightline and the X axis (transverse direction) in the coordinate system of the camera, or an angle θY between the user sightline and the Y axis (vertical direction) in the coordinate system of the camera, or is expressed as θ(X, Y). In some embodiments, the angle, for example, is an angle between a projection of the user sightline in the XY plane of the coordinate system of the camera and the connecting line. In some embodiments, the angle, for example, is an angle θX between the projection of the user sightline in the XY plane of the coordinate system of the camera and the X axis (transverse direction), or an angle θY between the projection of the user sightline in the XY plane of the coordinate system of the camera and the Y axis (vertical direction), or is expressed as θ(X, Y).

In some embodiments, the user viewing angle is an angle of the connecting line between both eyes of the user relative to the coordinate system of the camera. In some embodiments, the angle, for example, is an angle θX formed by the connecting line between both eyes and the X axis in the coordinate system of the camera, or an angle θY formed by the connecting line between both eyes and the Y axis in the coordinate system of the camera, or is expressed as θ(X, Y). In some embodiments, the angle, for example, is an angle between a projection of the connecting line, between both eyes in the XY plane of the coordinate system of the camera and the connecting line. In some embodiments, the angle, for example, is an angle θX between the projection of the connecting line, between both eyes in the XY plane of the coordinate system of the camera and the X axis, or an angle θY between the projection of the connecting line, between both eyes in the XY plane of the coordinate system of the camera and the Y axis, or is expressed as θ(X, Y).

In some embodiments, the user viewing angle may be an angle of a plane, in which the face of the user is, relative to the coordinate system of the camera. In some embodiments, the angle, for example, is an angle between the plane, in which the face is, and the XY plane of the coordinate system of the camera. The plane, in which the face is, can be determined by extracting a plurality of face features; and the face features, for example, may be forehead, eyes, ears, corners of the mouth, chin or the like.

In some embodiments, the user viewing angle may be an angle of the user relative to the multi-viewpoint 3D display screen or the display plane of the multi-viewpoint 3D display screen. The coordinate system of multi-viewpoint 3D display screen or the display plane is defined therein, wherein a center of multi-viewpoint 3D display screen or the center o of the display plane is taken as the origin; a horizontal (transverse) straight line is taken as an x axis; a vertical straight line is taken as a y axis; and a straight line perpendicular to an xy plane is taken as a z axis (depth direction).

In some embodiments, the user viewing angle may be an angle of a connecting line between the eye (a single eye) of the user and a center o of the multi-viewpoint 3D display screen or the display plane relative to a coordinate system of the multi-viewpoint 3D display screen or the display plane. In some embodiments, the angle, for example, is an angle βx between the connecting line and the x axis in the coordinate system, or an angle θy between the connecting line and the y axis in the coordinate system, or is expressed as θ(x, y). In some embodiments, the angle, for example, is an angle between a projection of the connecting line in the xy plane of the coordinate system of the camera and the connecting line. In some embodiments, the angle, for example, is an angle βx between the projection of the connecting line in the xy plane of the coordinate system and the x axis, or an angle θy between the projection of the connecting line in the xy plane of the coordinate system and the y axis, or is expressed as θ(x, y).

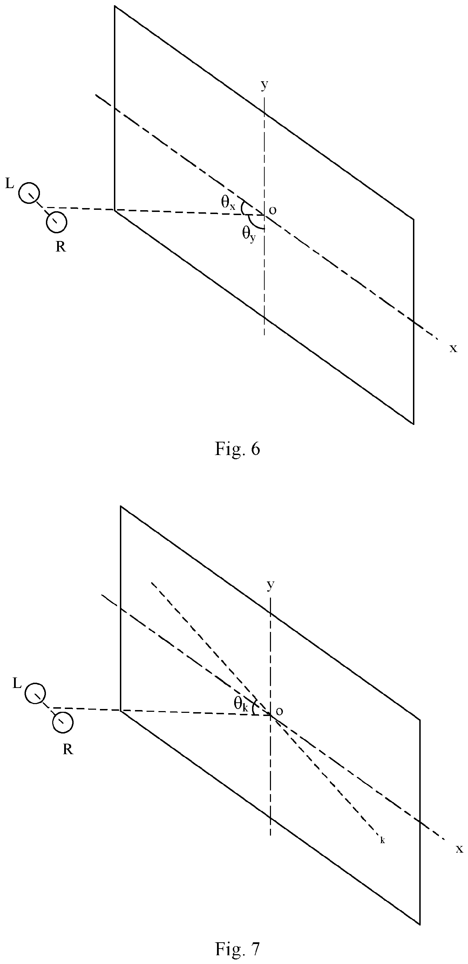

In some embodiments, the user viewing angle may be an angle of a connecting line (i.e., the user sightline) between a midpoint of the connecting line, between both eyes of the user, and the center o of the multi-viewpoint 3D display screen or the display plane relative to the coordinate system of the multi-viewpoint 3D display screen or the display plane. In some embodiments, as shown in Fig. 6, the angle, for example, is an angle θx between the user sightline and the x axis in the coordinate system, or an angle θy between the user sightline and the y axis in the coordinate system, or is expressed as θ(x, y); and in the figure, R represents the right eye of the user, and L represents the left eye of the user. In some embodiments, as shown in Fig. 7, the angle, for example, is an angle θk between a projection k of the user sightline in the xy plane of the coordinate system and the user sightline. In some embodiments, the angle, for example, is an angle θx between the projection of the user sightline in the xy plane of the coordinate system and the X axis, or an angle θy between the projection of the user sightline in the xy plane of the coordinate system and the y axis, or is expressed as θ(x, y).

In some embodiments, the user viewing angle may be an angle of a connecting line between both eyes of the user relative to the coordinate system of the multi-viewpoint 3D display screen or the display plane. In some embodiments, the angle, for example, is an angle θx between the connecting line and the x axis in the coordinate system, or an angle θy between the connecting line and the y axis in the coordinate system, or is expressed as θ(x, y). In some embodiments, the angle, for example, is an angle between a projection of the connecting line in the xy plane of the coordinate system of the camera and the connecting line. In some embodiments, the angle, for example, is an angle θx between the projection of the connecting line in the xy plane of the coordinate system and the x axis, or an angle θy between the projection of the connecting line in the xy plane of the coordinate system of the camera and the y axis, or is expressed as θ(x, y).

In some embodiments, the user viewing angle may be an angle of a plane, in which the face of the user is, relative to the coordinate system of the multi-viewpoint 3D display screen or the display plane. In some embodiments, the angle, for example, is an angle between the plane, in which the face is, and the xy plane of the coordinate system. The plane, in which the face is, can be determined by extracting a plurality of face features; and the face features, for example, may be forehead, eyes, ears, corners of the mouth, chin or the like.

In some embodiments, the camera is arranged in the front of the multi-viewpoint 3D display screen. In this case, the coordinate system of the camera may be regarded as the coordinate system of the multi-viewpoint 3D display screen or the display plane.

To determine the user viewing angle, the 3D display device may be provided with a viewing angle determining apparatus. The viewing angle determining apparatus may be software, such as a calculation module and program instructions, and may also be hardware. The viewing angle determining apparatus may be integrated in the 3D processing apparatus, may also be integrated in the eye positioning apparatus, and may also transmit user viewing angle data to the 3D processing apparatus.

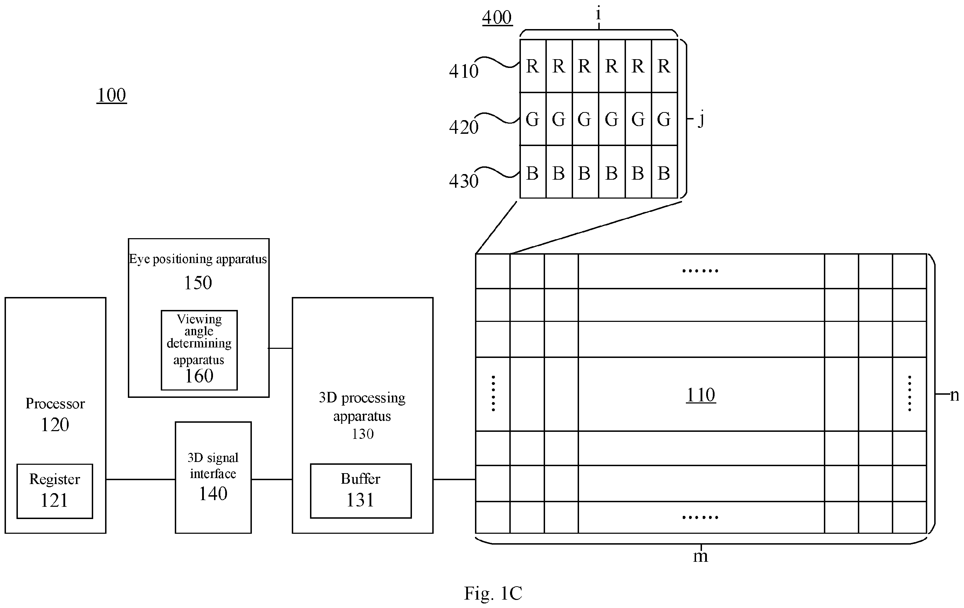

In the embodiment shown in Fig. 1A, the viewing angle determining apparatus 160 is communicatively connected with the 3D processing apparatus 130. The 3D processing apparatus may receive the user viewing angle data, generate a 3D image corresponding to the user viewing angle based on the user viewing angle data, and render subpixels, related to a viewpoint, in the composite subpixels according to the generated 3D image based on the viewpoint, where the eye of the user (e.g., both eyes) is located, determined by the eye positioning data. In some embodiments, as shown in Fig. 1B, the 3D processing apparatus may receive the eye space position information determined by the eye positioning apparatus 150 and the user viewing angle data determined by the viewing angle determining apparatus 160. In some embodiments, as shown in Fig. 1C, the viewing angle determining apparatus 160 may be integrated in the eye positioning apparatus 150, for example, be integrated in the eye positioning image processor 152; and the eye positioning apparatus 150 is communicatively connected with the 3D processing apparatus, and transmits the eye positioning data including the user viewing angle data and the eye space position information to the 3D processing apparatus. In other embodiments, the viewing angle determining apparatus may be integrated in a 3D processing apparatus; and the 3D processing apparatus receives the eye space position information and determines the user viewing angle data based on the eye space position information. In some embodiments, the eye positioning apparatus is communicatively connected with the 3D processing apparatus and the viewing angle determining apparatus, respectively, and transmits the eye space position information to the both; and the viewing angle determining apparatus determines the user viewing angle data based on the eye space position information and transmit the eye space position information to the 3D processing apparatus.

After receiving or determining the user viewing angle data, the 3D processing apparatus may generate a 3D image conforming to the viewing angle from the received 3D model or 3D video including DOF information in a follow-up manner based on the user viewing angle data, thereby presenting 3D images having different DOF information and rendered images to users at different user viewing angles, so that the users have a visual feeling similar to observing real objects from different angles.

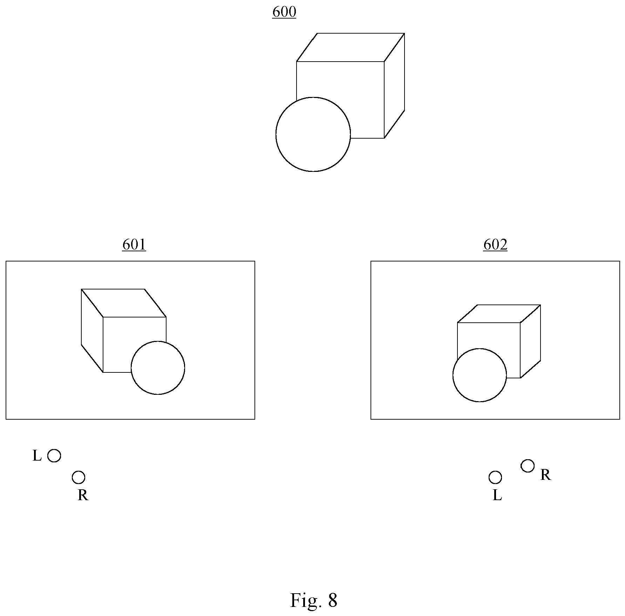

Fig. 8 schematically shows different 3D images generated based on the same 3D model for different user viewing angles. As shown in Fig. 8, the 3D processing apparatus receives a 3D model 600 having DOF information, and also receives or confirms a plurality of different user viewing angles. For various user viewing angles, the 3D processing apparatus generates different 3D images 601 and 602 from the 3D model 600. In the figure, R represents the right eye of user; and L represents the left eye of user. Subpixels corresponding to corresponding viewpoints are respectively rendered according to different 3D images 601 and 602 generated based on the DOF information corresponding to different user viewing angles, wherein the corresponding viewpoints refer to viewpoints, where both eyes of the user are located, determined by the eye positioning data. For the users, the obtained 3D display effects follow up different user viewing angles. According to the change of the user viewing angle, the follow-up effect, for example, may be follow-up in the horizontal direction, follow-up in the vertical direction, follow-up in the depth direction, or follow-up of components in the transverse, vertical, and depth directions.

A plurality of different user viewing angles may be generated based on a plurality of users, and may also be generated based on movements or actions of the same user.

In some embodiments, the user viewing angle is detected and determined in real time. In some embodiments, the change of the user viewing angle is detected and determined in real time; and when the change of the user viewing angle is less than a predetermined threshold, a 3D image is generated based on the user viewing angle before the change. Such a case may happen when the user temporarily shakes his head by a small margin or in a small range or makes posture adjustment, for example, performing posture adjustment on a fixed seat. At this moment, the user viewing angle before the change is still taken as a current user viewing angle; and a 3D image corresponding to DOF information corresponding to the current user viewing angle is generated.

In some embodiments, the viewpoints, where the eyes of the user are located, may be determined based on the identified eyes or the determined eye space positions. The correspondence between the eye space position information and the viewpoints may be stored in the processor in the form of correspondence table, and received by the 3D processing apparatus. Optionally, the correspondence between the eye space position information and the viewpoints may be stored in the 3D processing apparatus in the form of correspondence table.

Display of the 3D display device according to embodiments of the present disclosure is described below. As described above, the 3D display device may have a plurality of viewpoints. Eyes of the user may see the display of corresponding subpixels in composite subpixels of each composite pixel in the multi-viewpoint 3D display screen at each viewpoint position (spatial position). Two different pictures seen by both eyes of the user at different viewpoint positions form parallax, to composite a 3D picture in the brain.

In some embodiments, the 3D processing apparatus may render the corresponding subpixels in each composite subpixel based on the generated 3D image and the determined viewpoints of the eyes of the user. The correspondence between the viewpoints and the subpixels may be stored in the processor in the form of correspondence table, and received by the 3D processing apparatus. Optionally, the correspondence between the viewpoints and the subpixels may be stored in the 3D processing apparatus in the form of correspondence table.

In some embodiments, two parallel images, such as a left-eye parallax image and a right-eye parallax image, are generated by the processor or the 3D processing apparatus based on the generated 3D image. In some embodiments, the generated 3D image is taken as one of two parallel images, such as one of the left-eye parallax image and the right-eye parallax image, and the other of the two parallel images is generated based on the 3D image, such as the other of the left-eye parallax image and the right-eye parallax image. The 3D processing apparatus renders at least one subpixel in each composite subpixel based on one of the two images according to the determined viewpoint position of one of both eyes of the user, and render at least another subpixel in each composite subpixel based on the other of the two images according to the determined viewpoint position of the other of both eyes of the user.

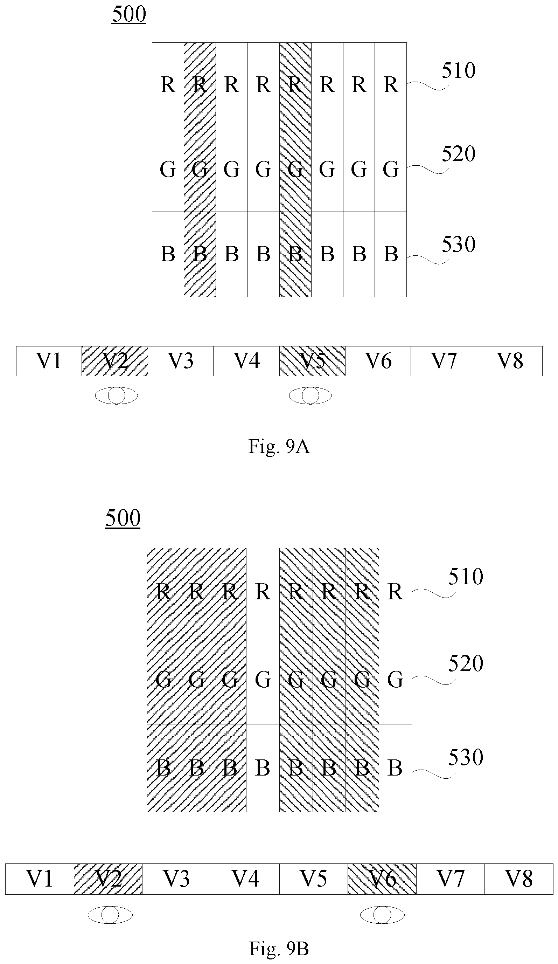

The rendering of subpixels according to the viewpoints will be described in detail below in combination with embodiments shown in Figs. 9A to 9E. In the illustrated embodiments, the 3D display device has eight viewpoints V1-V8. Each composite pixel 500 in the multi-viewpoint 3D display screen of the 3D display device is composed of three composite subpixels 510, 520 and 530. Each composite subpixel is composed of eight homochromatic subpixels corresponding to the eight viewpoints. As shown in the figures, the composite subpixel 510 is a red composite subpixel composed of eight red subpixels R; the composite subpixel 520 is a green composite subpixel composed of eight green subpixels G; and the composite subpixel 530 is a blue composite subpixel composed of eight blue subpixels B. A plurality of composite pixels are arranged in the form of array in a multi-viewpoint 3D display screen. For the sake of clarity, only one composite pixel 500 in the multi-viewpoint 3D display screen is shown in the figures. The construction of other composite pixels and the rendering of subpixels may refer to descriptions of the shown composite pixel.

In some embodiments, when it is determined that each eye of the user corresponds to one viewpoint based on the eye space position information, the 3D processing apparatus may render the corresponding subpixels in the composite subpixels according to the 3D image corresponding to the user viewing angle and generated by the DOF information of the 3D model or the 3D video.

Referring to Fig. 9A, in the illustrated embodiment, the left eye of the user is at a viewpoint V2; the right eye is at a viewpoint V5; left and right eye parallax images corresponding to the two viewpoints V2 and V5 are generated based on the 3D images; and subpixels, corresponding to the two viewpoints V2 and V5, of the composite subpixels 510, 520 and 530 are rendered.

In some embodiments, when it is determined that each eye of the user corresponds to one viewpoint based on the eye space position information, the 3D processing apparatus may render subpixels, corresponding to the two viewpoints, in the composite subpixels according to the 3D images corresponding to the user viewing angles and generated by the DOF information of the 3D model or the 3D video.

Referring to Fig. 9B, in the illustrated embodiment, the left eye of the user is at a viewpoint V2; the right eye is at a viewpoint V6; left and right eye parallax images corresponding to the two viewpoints V2 and V6 are generated based on the 3D images; the subpixels, corresponding to the two viewpoints V2 and V6, of the composite subpixels 510, 520 and 530 are rendered; and meanwhile, subpixels corresponding to adjacent viewpoints at both sides of each of the viewpoints V2 and V6 are further rendered. In some embodiments, subpixels corresponding to an adjacent viewpoint at one side of each of the viewpoints V2 and V6 may also be rendered at the same time.

In some embodiments, when it is determined that each eye of the user is between two viewpoints based on the eye space position information, the 3D processing apparatus may render subpixels, corresponding to the four viewpoints, in the composite subpixels according to the 3D images corresponding to the user viewing angles and generated by the DOF information of the 3D model or the 3D video.

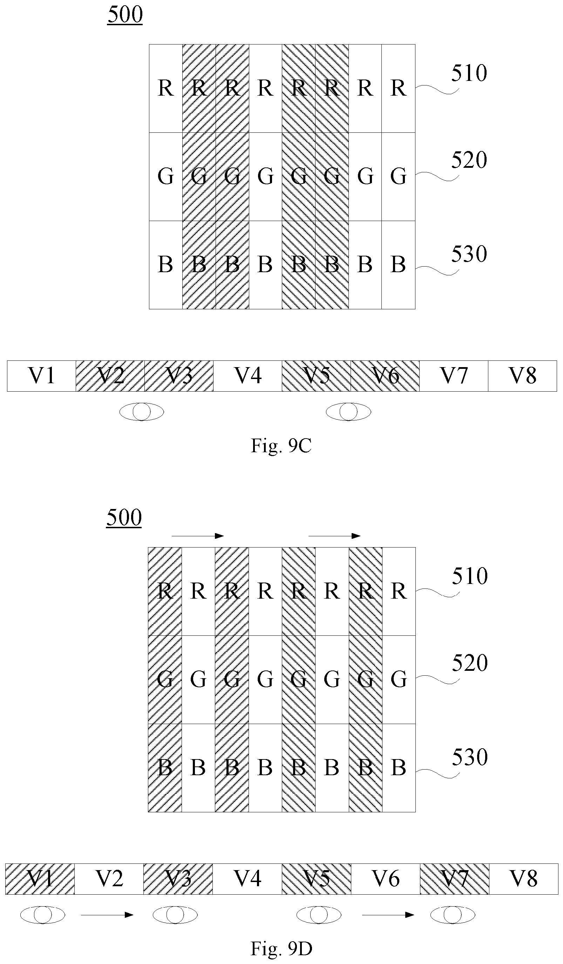

Referring to Fig. 9C, in the illustrated embodiment, the left eye of the user is between viewpoints V2 and V3; the right eye is between viewpoints V5 and V6; left and right eye parallax images corresponding to the viewpoints V2 and V3 as well as V5 and V6 are generated based on the 3D images; and subpixels, corresponding to the viewpoints V2 and V3 as well as V5 and V6, of the composite subpixels 510, 520 and 530 are rendered.

In some embodiments, when it is determined that the viewpoint position corresponding to at least one of both eyes of the user changes based on the eye space position information, the 3D processing apparatus may switch from rendering subpixels, corresponding to the viewpoint positions before change, in the composite subpixels to rendering subpixels, corresponding to the viewpoint positions after change, in the composite subpixels, according to the 3D images corresponding to the user viewing angles and generated by the DOF information of the 3D model or the 3D video.

Referring to Fig. 9D, when the left eye of the user moves from a viewpoint V1 to a viewpoint V3, and the right eye moves from a viewpoint V5 to a viewpoint V7, the rendered subpixels of the composite subpixels 510, 520 and 530 are adjusted accordingly, to adapt to the changed viewpoint positions.

In some embodiments, when it is determined that more than one user is present based on the eye space position information, the 3D processing apparatus may render subpixels, corresponding to viewpoints where the eyes of each user are located, in the composite subpixels according to the 3D image corresponding to each user viewing angle and generated by the DOF information of the 3D model or the 3D video.

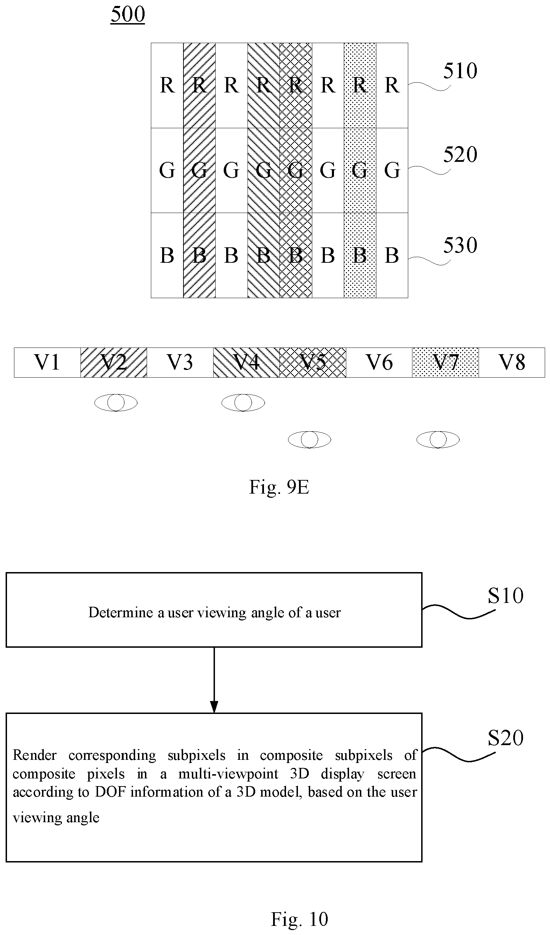

Referring to Fig. 9E, two users face the 3D display device; both eyes of a first user are at viewpoints V2 and V4; and both eyes of a second user are at viewpoints V5 and V7. A first 3D image corresponding to a first user viewing angle and a second 3D image corresponding to a second user viewing angle are generated according to the DOF information of the 3D model or the 3D video; left and right eye parallax images corresponding to viewpoints V2 and V4 are generated based on the first 3D image; and left and right eye parallax images corresponding to viewpoints V5 and V7 are generated based on the second 3D image. The 3D processing apparatus renders subpixels, respectively corresponding to the viewpoints V2 and V4 as well as V5 and V7, of the composite subpixels 510, 520 and 530.

In some embodiments, a theoretical correspondence exists in the correspondence between the subpixels of the 3D display device and the viewpoints. Such a theoretical correspondence may be uniformly set or modulated when the 3D display device is produced from an assembly line, and may also be stored in the 3D display device in the form of correspondence table, for example, being stored in a processor or a 3D processing apparatus. Due to installation, material or alignment of gratings, when 3D display device is actually used, a problem that the subpixels viewed from the viewpoint positions in space does not correspond to theoretical subpixels may exist. This affects the correct display of 3D images. It is beneficial for the 3D display device to calibrate or correct the correspondence between subpixels and viewpoints in actual use of the 3D display device. In embodiments provided by the present disclosure, such a correspondence between viewpoints and subpixels existing in the actual use of the 3D display device is called "corrected correspondence". The "corrected correspondence" may be different from or consistent with the "theoretical correspondence".

The process of acquiring the "corrected correspondence" is a process of finding the correspondence between the viewpoints and subpixels in the actual display process. In some embodiments, in order to determine the corrected correspondence between the subpixels in the composite subpixels of each composite pixel in the multi-viewpoint 3D display screen and the viewpoints, the multi-viewpoint 3D display screen or the display panel can be divided into a plurality of correction regions; the corrected correspondence between the subpixels and the viewpoints in each correction region can be determined respectively; and then, corrected correspondence data in each region are stored by regions, for example, being stored in the processor or the 3D processing apparatus in the form of correspondence table.

In some embodiments, the corrected correspondence between at least one subpixel in each correction region and the viewpoints is obtained by detection; and the corrected correspondence between other subpixels and the viewpoints in each correction region is reckoned or estimated by mathematical calculation with reference to the detected corrected correspondence. Mathematical calculation methods comprise: linear difference, linear extrapolation, nonlinear difference, nonlinear extrapolation, Taylor series approximation, linear change of reference coordinate system, nonlinear change of reference coordinate system, exponential model, trigonometric transform and the like.

In some embodiments, the multi-viewpoint 3D display screen is defined with a plurality of correction regions; and the range of combined area of all correction regions is 90% to 100% of the area of the multi-viewpoint 3D display screen. In some embodiments, a plurality of correction regions are arranged in the form of array in the multi-viewpoint 3D display screen. In some embodiments, each correction region may be defined by one composite pixel containing three composite subpixels. In some embodiments, each correction region may be defined by two or more composite pixels. In some embodiments, each correction region may be defined by two or more composite subpixels. In some embodiments, each correction region may be defined by two or more composite subpixels that do not belong to the same composite pixel.

In some embodiments, the deviation of the corrected correspondence between subpixels and viewpoints in one correction region from the theoretical correspondence may be consistent, basically consistent, or inconsistent with the deviation of the corrected correspondence between subpixels and viewpoints in another correction region from the theoretical correspondence.

A 3D image display method, for the above 3D display device, is provided according to embodiments of the present disclosure. As shown in Fig. 10, the 3D image display method comprises:

　　　S10, determining a user viewing angle of a user; and
　　　S20, rendering corresponding subpixels in composite subpixels of composite pixels in a multi-viewpoint 3D display screen according to DOF information of a 3D model, based on the user viewing angle.

In some embodiments, the corresponding subpixels in the composite subpixels of the composite pixels in the multi-viewpoint 3D display screen may also be rendered according to DOF information of a 3D video.

In some embodiments, the 3D image display method comprises:

　　　S100, determining a user viewing angle of a user;
　　　S200, determining viewpoints where eyes of the user are located;
　　　S300, receiving a 3D model or a 3D video including DOF information;
　　　S400, generating a 3D image according to the 3D model or the 3D video including the DOF information, based on the determined user viewing angle; and
　　　S500, rendering, based on the determined viewpoints where the eyes of the user are located, corresponding subpixels in composite subpixels of composite pixels in a multi-viewpoint 3D display screen according to the generated 3D image, wherein the corresponding subpixels refer to subpixels, corresponding to the determined viewpoints where the eyes of the user are located, in the composite subpixels.

In some embodiments, determining the user viewing angle comprises: detecting the user viewing angle in real time.

In some embodiments, generating a 3D image according to the 3D model or the DOF information of the 3D video based on the determined user viewing angle comprises: determining a change of the user viewing angle detected in real time; and when the change of the user viewing angle is less than a predetermined threshold, generating the 3D image based on the user viewing angle before the change.

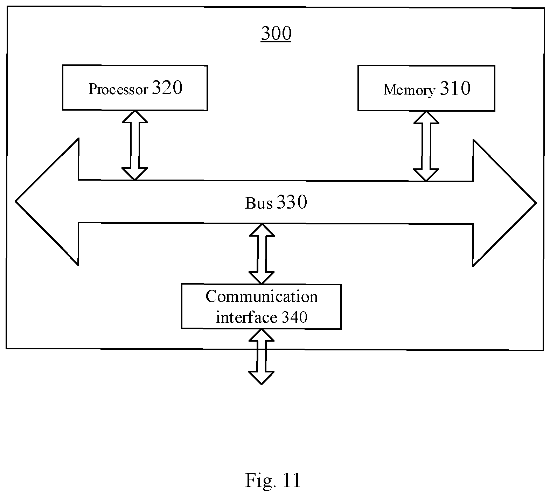

Embodiments of the present disclosure provide a 3D display device 300; referring to Fig. 11, the 3D display device 300 comprises a processor 320 and a memory 310. In some embodiments, the electronic device 300 may also comprise a communication interface 340 and a bus 330, wherein the processor 320, the communication interface 340 and the memory 310 communicate with each other through the bus 330. The communication interface 340 may be configured to transmit information. The processor 320 may call logic instructions in the memory 310, to implement the method for the follow-up display of 3D images based on user viewing angles in the 3D display device of the above embodiment.

In addition, the logic instructions in the memory 310 may be implemented in the form of software functional units, and may be stored in a computer-readable storage medium when being sold or used as an independent product.

The memory 310, as a computer-readable storage medium, may be used for storing software programs and computer-executable programs, such as program instructions/modules corresponding to the methods in embodiments of the present disclosure. The processor 320 implements the function application and data processing by running the program instructions/modules stored in the memory 310, i.e., implements the method for switching the display of 3D images and 2D images in the electronic device in embodiments of the above method.

The memory 310 may comprise a program storage region and a data storage region, wherein the program storage region may store an operating system and application programs required by at least one function; the data storage region may store data created according to the use of a terminal device, and the like. In addition, the memory 310 may comprise a high-speed RAM, and may further comprise an NVM.

The computer-readable storage medium provided by the embodiments of the present disclosure stores computer-executable instructions; and the computer-executable instructions are configured to implement the 3D image display method.

The computer program product provided by the embodiments of the present disclosure comprises computer programs stored on the computer-readable storage medium; the computer programs comprise program instructions; and when the program instructions are executed by a computer, the computer executes the 3D image display method.

Technical solutions of embodiments of the present disclosure may be reflected in the form of a software product, which is stored in a storage medium and comprises one or more instructions for enabling computer equipment (which may be a personal computer, a server, network equipment or the like) to perform all or some steps of the method in embodiments of the present disclosure. The storage medium may be a non-transient storage medium, comprising a plurality of media capable of storing program codes, such as a U disk, a mobile hard disk, a read-only memory (ROM), a RAM, a diskette or an optical disk, and may also be a transient storage medium.

The above description and drawings sufficiently illustrate the embodiments of the present disclosure to enable those skilled in the art to practice them. Other embodiments may comprise structural, logical, electrical, process, and other changes. Embodiments represent only possible changes. Unless expressly required, individual components and functions are optional and the order of operations may be changed. Parts and features of some embodiments may be included in or substituted for parts and features of other embodiments. The scope of the disclosed embodiments includes the full scope of the claims, and all available equivalents of the claims. In addition, the terms used in the present application are used to describe the embodiments only and not to limit the claims. In addition, when used in the present application, the terms "comprise", etc., refer to the presence of at least one of stated features, integers, steps, operations, elements, and/or components, but does not preclude the presence or addition of one or more other features, integers, steps, operations, elements, components and/or groupings of these. Herein, the difference of each embodiment from each other may be the focus of explanation. The same and similar parts among all of the embodiments may be referred to each other. For the method and product disclosed by the embodiments, if the method and product correspond to a method part disclosed by the embodiments, the description of the method part can be referred to for the related part.

Those skilled in the art may recognize that the units and algorithm steps of each example described in conjunction with the embodiments disclosed herein can be implemented in electronic hardware, or a combination of computer software and electronic hardware. Whether these functions are performed in hardware or software may depend on the specific application and design constraints of the technical solutions. Those skilled in the art may use different methods for implementing the described functions for each particular application, but such implementations should not be considered beyond the scope of the embodiments of the present disclosure. Those skilled in the art can clearly understand that, for the convenience and simplicity of description, the specific working processes of the system, the apparatus and the unit above can refer to the corresponding processes in the above method embodiments and will not be repeated here.

In the embodiments disclosed herein, the disclosed method and product (including, but not limited to the apparatus and the device) may be realized in other ways. For example, the device embodiments described above are merely schematic. For example, the division of the units may be only a logical functional division, and may be an additional division manner in actual realization. For example, multiple units or components may be combined or integrated into another system, or some features may be ignored or not executed. In addition, the displayed or discussed mutual coupling or direct coupling or communication connection may be indirect coupling or communication connection through some interfaces, devices or units, and may be electrical, mechanical or other forms. The units described as separate components may or may not be physically separated, and the components shown as the units may or may not be physical units, may be located in one place or may be distributed on a plurality of network units. The present embodiments may be implemented by selecting some or all of the units according to actual needs. In addition, each functional unit in the embodiments of the present disclosure may be integrated into one processing unit, or each unit may exist physically alone, or two or more units may be integrated into one unit.

The flow charts and block diagrams in the drawings show architectures, functions and operations possibly implemented by systems, methods and computer program products according to the embodiments of the present disclosure. In this regard, each block in the flow charts or block diagrams may represent a part of a module, program segment or code, and part of the module, program segment or code contains one or more executable instructions for implementing specified logical functions. In some alternative implementations, the functions marked in the blocks may also occur in an order different from the order marked in the drawings. For example, two continuous blocks may actually be executed substantially concurrently, or sometimes may be executed in a reverse order, depending on the functions involved. In the descriptions corresponding to the flow charts and the block diagrams in the drawings, operations or steps corresponding to different blocks may also occur in different orders than those disclosed, and sometimes there is no specific order between different operations or steps. For example, two continuous operations or steps may be actually performed substantially concurrently, or sometimes may be performed in the reverse order, depending on the functions involved. Each block in the block diagrams and/or flow charts, and combinations of the blocks in the block diagrams and/or flow charts, can be implemented by special hardware-based systems that perform specified functions or actions, or implemented by combinations of special hardware and computer instructions.

**Claims**

1. A 3D display device, comprising:

    a multi-viewpoint 3D display screen, comprising a plurality of composite pixels, wherein each composite pixel of the plurality of composite pixels comprises a plurality of composite subpixels, and each composite subpixel of the plurality of composite subpixels comprises a plurality of subpixels corresponding to a plurality of viewpoints of the 3D display device;
    a viewing angle determining apparatus, configured to determine a user viewing angle of a user;
    a 3D processing apparatus, configured to render, based on the user viewing angle, corresponding subpixels of the plurality of composite subpixels according to depth-of-field (DOF) information of a 3D model.

2. The 3D display device according to claim 1, wherein the 3D processing apparatus is configured to generate a 3D image by the DOF information based on the user viewing angle, and render the corresponding subpixels according to the 3D image.

3. The 3D display device according to claim 2, further comprising:

    an eye positioning apparatus, configured to determine eye space positions of a user;
    the 3D processing apparatus is configured to determine viewpoints where eyes of the user are located based on the eye space positions, and render subpixels corresponding to viewpoints where the eyes are located based on the 3D image.

4. The 3D display device according to claim 3, wherein the eye positioning apparatus comprises:

    an eye positioner, configured to shoot a user image of the user;
    an eye positioning image processor, configured to determine the eye space positions based on the user image; and
    an eye positioning data interface, configured to transmit eye space position information which indicates the eye space positions.

5. The 3D display device according to claim 4, wherein the eye positioner comprises:

    a first camera, configured to shoot first images; and
    a second camera, configured to shoot second images;
    wherein the eye positioning image processor is configured to identify presence of eyes based on at least one of the first images and the second images and determine the eye space positions based on identified eyes.

6. The 3D display device according to claim 4, wherein the eye positioner comprises:

    a camera, configured to shoot images; and
    a depth detector, configured to acquire eye depth information of a user;
    wherein the eye positioning image processor is configured to identify presence of eyes based on the images and determine the eye space positions based on identified eye positions and the eye depth information.

7. The 3D display device according to any one of claims 1-6, wherein the user viewing angle is an angle between the user and a display plane of the multi-viewpoint 3D display screen.

8. The 3D display device according to claim 7, wherein the user viewing angle is an angle between a user sightline and a display plane of the multi-viewpoint 3D display screen, wherein the user sightline is a connecting line between a midpoint of a connecting line, between both eyes of a user, and a center of the multi-viewpoint 3D display screen.

9. The 3D display device according to claim 8, wherein the user viewing angle is:

    an angle between the user sightline and at least one of transverse, vertical and depth directions of the display plane; or
    an angle between the user sightline and a projection of the user sightline in the display plane.

10. The 3D display device according to any one of claims 1-6, further comprising: a 3D signal interface, configured to receive the 3D model.

11. A 3D image display method, comprising:

    determining a user viewing angle of a user; and
    rendering corresponding subpixels in composite subpixels of composite pixels in a multi-viewpoint 3D display screen according to DOF information of a 3D model, based on the user viewing angle.

12. The 3D image display method according to claim 11, wherein rendering corresponding subpixels in composite subpixels of composite pixels in a multi-viewpoint 3D display screen according to DOF information of a 3D model, based on the user viewing angle comprises:

generating a 3D image by the DOF information based on the user viewing angle, and rendering the corresponding subpixels according to the 3D image.

13. The 3D image display method according to claim 12, further comprising:

determining eye space positions of a user;
determining viewpoints where eyes of the user are located based on the eye space positions; and
rendering subpixels corresponding to viewpoints where the eyes are located based on the 3D image.

14. The 3D image display method according to claim 13, wherein determining eye space positions of a user comprises:

shooting a user image of the user;
determining the eye space positions based on the user image; and
transmitting eye space position information which indicates the eye space positions.

15. The 3D image display method according to claim 14, wherein shooting a user image of the user and determining the eye space positions based on the user image comprises:

shooting first images;
shooting second images;
identifying presence of eyes based on at least one of the first images and the second images; and
determining the eye space positions based on identified eyes.

16. The 3D image display method according to claim 14, wherein shooting a user image of the user and determining the eye space positions based on the user image comprises:

shooting images;
acquiring eye depth information of a user;
identifying presence of eyes based on the images; and
jointly determining the eye space positions based on identified eye positions and the eye depth information.

17. The 3D image display method according to any one of claims 11-16, wherein the user viewing angle is

an angle between the user and a display plane of the multi-viewpoint 3D display screen.

18. The 3D image display method according to claim 17, wherein the user viewing angle is an angle between a user sightline and a display plane of the multi-viewpoint 3D display screen, wherein the user sightline is a connecting line between a midpoint of a connecting line, between both eyes of a user, and a center of the multi-viewpoint 3D display screen.

19. The 3D image display method according to claim 18, wherein the user viewing angle is:

an angle between the user sightline and at least one of transverse, vertical and depth directions of the display plane; or
an angle between the user sightline and a projection of the user sightline in the display plane.

20. The 3D image display method according to any one of claims 11-16, further comprising:
receiving a 3D model.

21. A 3D display device, comprising:

a processor; and
a memory storing program instructions;
the processor is configured to execute the 3D image display method of any one of claims 11-20 when executing the program instructions.

22. A computer-readable storage medium, storing computer-executable instructions, wherein the computer-executable instructions are configured to execute the method of any one of claims 11-20.

23. A computer program product, comprising computer programs stored on a computer-readable storage medium, wherein the computer programs comprise program instructions, and make a computer execute the method of any one of claims 11-20 when the program instructions are executed by the computer.

Fig. 1A

EP 4 068 768 A1

EP 4 068 768 A1

Fig. 1B

EP 4 068 768 A1

Fig. 1C

150

Fig. 2

Fig. 3

<u>150</u>

Fig. 4

Fig. 5

Fig. 6

Fig. 7

600

601

602

L ○
  ○
  R

○ R
○
L

Fig. 8

500

| R | R | R | R | R | R | R | R | 510 |
| G | G | G | G | G | G | G | | 520 |
| B | B | B | B | B | B | B | | 530 |

| V1 | V2 | V3 | V4 | V5 | V6 | V7 | V8 |

Fig. 9A

500

| R | R | R | R | R | R | R | R | 510 |
| G | G | G | G | G | G | G | | 520 |
| B | B | B | B | B | B | B | | 530 |

| V1 | V2 | V3 | V4 | V5 | V6 | V7 | V8 |

Fig. 9B

500

| R | R | R | R | R | R | R | R | ~ 510 |
| G | G | G | G | G | G | G | ~ 520 |
| B | B | B | B | B | B | B | B | ~ 530 |

| V1 | V2 | V3 | V4 | V5 | V6 | V7 | V8 |

Fig. 9C

500

| R | R | R | R | R | R | R | ~ 510 |
| G | G | G | G | G | G | G | ~ 520 |
| B | B | B | B | B | B | B | B | ~ 530 |

| V1 | V2 | V3 | V4 | V5 | V6 | V7 | V8 |

Fig. 9D

500

R R R R R R R R — 510

G G G G G G G G — 520

B B B B B B B B — 530

| V1 | V2 | V3 | V4 | V5 | V6 | V7 | V8 |

Fig. 9E

Determine a user viewing angle of a user — S10

Render corresponding subpixels in composite subpixels of composite pixels in a multi-viewpoint 3D display screen according to DOF information of a 3D model, based on the user viewing angle — S20

Fig. 10

300

Processor 320

Memory 310

Bus 330

Communication
interface 340

Fig. 11

## INTERNATIONAL SEARCH REPORT

International application No.

**PCT/CN2020/133332**

### A. CLASSIFICATION OF SUBJECT MATTER

H04N 13/302(2018.01)i; H04N 13/383(2018.01)i; H04N 13/368(2018.01)i

According to International Patent Classification (IPC) or to both national classification and IPC

### B. FIELDS SEARCHED

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNPAT, CNKI, EPODOC, WPI, IEEE: 多视点, 复合像素, 阵列, 3d, 立体, 三维, 显示, 视角, 视点, 景深, 位置, 视线, 眼, 深度, composite pixel, array, 3d, stereo, three-dimensional, display, viewpoint, render, eye, position, depth, position, visual angle, line of sight

### C. DOCUMENTS CONSIDERED TO BE RELEVANT

| Category* | Citation of document, with indication, where appropriate, of the relevant passages | Relevant to claim No. |
|---|---|---|
| PX | CN 211128024 U (BEIJING IVISUAL3D TECHNOLOGY CO., LTD.) 28 July 2020 (2020-07-28) claims 1-10, description, paragraphs 138-152 | 1-23 |
| Y | CN 106454307 A (SAMSUNG ELECTRONICS CO., LTD.) 22 February 2017 (2017-02-22) description, paragraphs 6, 24-27, 169-172, 296-298, figure 12 | 1-23 |
| Y | CN 207320118 U (KUNSHAN GOVISIONOX OPTOELECTRONICS CO., LTD.) 04 May 2018 (2018-05-04) description, paragraphs 26, 31, 32, 35, figure 2 | 1-23 |
| A | CN 109993823 A (TENCENT TECHNOLOGY SHENZHEN CO., LTD.) 09 July 2019 (2019-07-09) entire document | 1-23 |
| A | CN 102693065 A (J. TOUCH CORPORATION) 26 September 2012 (2012-09-26) entire document | 1-23 |
| A | US 2003063383 A1 (COSTALES, Bryan L.) 03 April 2003 (2003-04-03) entire document | 1-23 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **07 February 2021** | **26 February 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/133332**

| Patent document cited in search report | | | Publication date (day/month/year) | Patent family member(s) | | | Publication date (day/month/year) |
|---|---|---|---|---|---|---|---|
| CN | 211128024 | U | 28 July 2020 | None | | | |
| CN | 106454307 | A | 22 February 2017 | EP | 3128752 | B1 | 12 June 2019 |
| | | | | KR | 20170017587 | A | 15 February 2017 |
| | | | | JP | 2017038367 | A | 16 February 2017 |
| | | | | EP | 3128752 | A1 | 08 February 2017 |
| | | | | US | 2017041596 | A1 | 09 February 2017 |
| | | | | US | 10397541 | B2 | 27 August 2019 |
| | | | | CN | 106454307 | B | 08 December 2020 |
| CN | 207320118 | U | 04 May 2018 | JP | 2020509415 | A | 26 March 2020 |
| | | | | TW | M573448 | U | 21 January 2019 |
| | | | | KR | 20190110135 | A | 27 September 2019 |
| | | | | WO | 2019041943 | A1 | 07 March 2019 |
| | | | | EP | 3678183 | A1 | 08 July 2020 |
| CN | 109993823 | A | 09 July 2019 | WO | 2020207202 | A1 | 15 October 2020 |
| CN | 102693065 | A | 26 September 2012 | None | | | |
| US | 2003063383 | A1 | 03 April 2003 | US | 2005146788 | A1 | 07 July 2005 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 201911231149X